# EUROPEAN PATENT APPLICATION

(11) **EP 1 326 467 A1**
(43) Date of publication of application: **09.07.2003**
(21) Application number: 02753240.7
(22) Date of filing: 06.08.2002
(51) Int. Cl.: H04Q 7/38

(54) **CDMA MOBILE COMMUNICATION METHOD AND SYSTEM**

(30) Priority: 09.08.2001 JP 2001242851
(71) Applicant: MATSUSHITA ELECTRIC INDUSTRIAL CO., LTD., Kadoma-shi, Osaka 571-8501 (JP)
(72) Inventor: SUZUKI, Hidetoshi, Yokosuka-shi, Kanagawa 239-0847 (JP)
(74) Representative: Grünecker, Kinkeldey, Stockmair & Schwanhäusser Anwaltssozietät
(86) International application number: JP0208008
(87) International publication number: WO03017710

(57) **Abstract**

CDMA mobile communication technology whereby each base station can be identified with a high degree of accuracy in uplinks from a mobile station to base stations, and inbound base station reception characteristics can be improved. With this technology, a mobile station 103 assigns different short codes to a signal with all of base stations 101a through 101c as destinations (a DPCH signal) and a signal with only a specific a base station 101a through 101c as a destination (an ACK/NACK signal in response to an HS-DSCH signal from a base station 101a through 101c). The mobile station 103 then spreads a transmit signal using the assigned short code and a long code specific to itself, and transmits the spread signal. Abase station 101a through 101c then receives the signal from the mobile station 103, despreads the received signal using the aforementioned assigned short code and the aforementioned long code specific to the mobile station 103, and regenerates the pre-spreading signal.

## Description

### Technical Field

The present invention relates to a method of performing radio mobile communications between a base station and a mobile station, and more particularly to a CDMA (Code Division Multiple Access) mobile communication method and system for performing CDMA radio mobile communications.

### Background Art

Progress is ongoing in the standardization of a technology that performs packet expansion, called HSDPA (High Speed Downlink Packet Access) , as an extended W-CDMA (Wideband-Code Division Multiple Access) system.

In this system, bidirectional communications are performed between abase station and mobile stations using communication channels called DPCHs (Dedicated Downlink Physical Channels) defined in the conventional W-CDMA method, and in parallel with this, mobile stations perform reception using a high-speed channel called an HS-DSCH (High Speed Downlink Shared Channel). At this time, a mobile station returns an ACK (ACKnowledgment: affirmative response) signal on the uplink in response to normal reception of an outbound HS-DSCH signal, or returns a NACK (Negative ACKnowledgment: negative response) signal if an outbound HS-DSCH signal cannot be received normally.

With an HS-DSCH, scheduling among users (determining to which mobile station a packet is to be transmitted) is performed by each base station, not by a control station that controls base stations. Therefore, with an HS-DSCH, a plurality of base stations transmit different signals to the same mobile station using individual schedulers, and soft handover between base stations is not performed. In this case, since different scheduling is carried out on an individual base station basis, as described above, mobile stations return an ACK/NACK signal to each base station, and all that is necessary is for each base station to accept only ACK/NACK signals directed to itself.

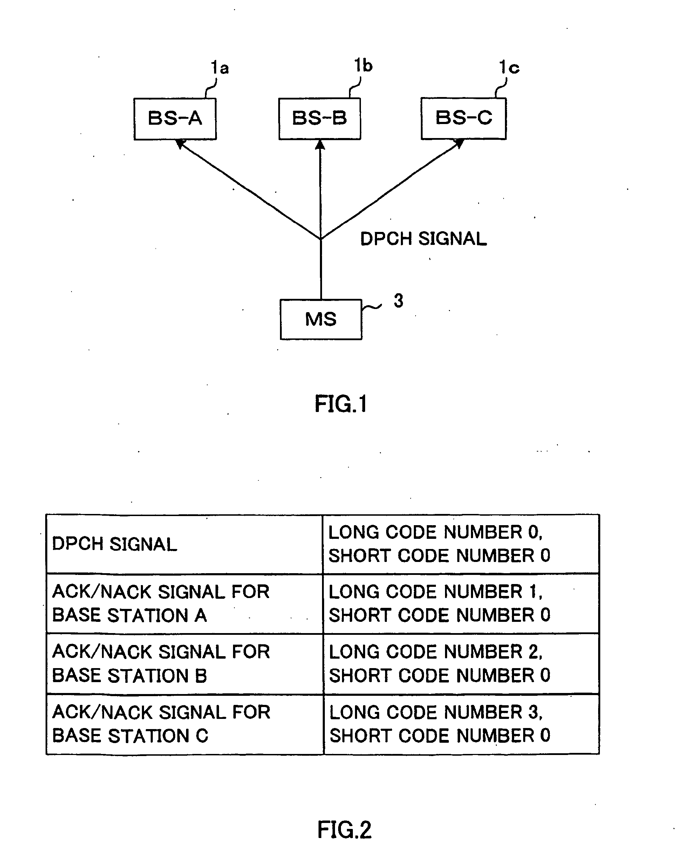

In the case of a DPCH, soft handover is performed between base stations, and therefore, in the above-described case, DPCH signals are transmitted with all of a plurality of base stations as destinations, as shown in FIG.1. For example, in the example shown in FIG. 1 in which there are three base stations (BS-A through BS-C) 1a through 1c and one mobile station (MS) 3, the mobile station 3 transmits an inbound DPCH signal to all of base stations 1a through 1c.

In a case where a plurality of base stations simultaneously transmit HS-DSCH signals, as described above, when a mobile station receives only the HS-DSCH signal from one of the base stations and returns an ACK/NACK signal to that base station, each base station must identify whether that ACK/NACK signal is directed to another base station or is directed to that base station itself.

That is to say, in a case where there is a signal that should be received by all base stations (a DPCH signal) and a signal that should be received only by a particular base station (an ACK/NACK signal in response to an HS-DSCH signal from a base station) , it is not desirable for the signal that should be received only by a particular base station to be received by a base station other than the specified base station, causing erroneous operation to be performed. A mobile station transmits both signals that should be received by all base stations and signals that should be received only by a specific base station, with the specific base station mentioned here differing according to circumstances: to take the example in FIG.1, for instance, this specific base station will be base station 1a at one moment and base station 1b at another moment. Thus, in the above-described system, it is necessary for a base station to be identified in an inbound signal.

As a method of identifying a base station, a method whereby base stations are differentiated by a symbol pattern may first be considered. However, in a method that employs symbol patterns, it is not possible to achieve great inter-code distances, and there is consequently a possibility of misidentification.

Next, a method whereby base stations are differentiated by changing a so-called long code will be considered. A long code, also known as a scrambling code, is a spreading code for arranging a signal into a pseudo-random sequence. Long codes are normally used for cell identification in downlinks, and for mobile station identification in uplinks.

FIG.2 shows an example in which base stations are identified by means of long codes. In this example, a DPCH signal is spread using a combination of long code number 0 and short code number 0, an ACK/NACK signal for base station A is spread using a combination of long code number 1 and short code number 0, an ACK/NACK signal for base station B is spread using a combination of long code number 2 and short code number 0, and an ACK/NACK signal for base station C is spread using a combination of long code number 3 and short code number 0. A short code here is also called a channelization code or spreading code, and is a spreading code for providing orthogonality between a plurality of channels (codes). Inter-code orthogonality is a relationship such that the value of the sum of products of the chip patterns of spreading codes Ci and Cj (the sum for the number of spreading code synchronous chips)-that is, the cross-correlation value-is zero (0).

With this method, however, since long codes are pseudo-random signal sequences and not codes that maintain orthogonality, it is not possible to assure orthogonality between an ACK/NACK signal with a specific base station as its destination and a DPCH signal transmitted at the same time, and there is a possibility of inbound base station reception characteristics degrading.

In a system in which reception simultaneous with a DPCH is required, since inter-code orthogonality is not assured between a conventional channel (DPCH) and a channel on which an ACK/NACK signal directed to a specific base station is transmitted if the long code is changed for each communicating base station, as described above, there is a possibility of interference occurring between the conventional channel and ACK/NACK signal channel in an inbound base station, resulting in degradation of reception characteristics.

Also, in the above-described system, signals that should identify a base station include, for example, in addition to ACK/NACK signals, a signal that reports the reception status of an outbound pilot signal. In HSDPA, a technology called adaptive modulation is used, whereby the modulation method and coding rate of outbound HS-DSCH signals are changed according to the propagation path status. The propagation path status is measured by a mobile station, and reported to the base station. Even if DPCH communications are being carried out simultaneously with a plurality of base stations, since the downlink propagation status differs for each base station, a mobile station must send a different report to each base station. If a base station erroneously receives a report directed to another base station, the base station receiving the wrong report will erroneously identify the propagation path status, and it is possible that optimization of the outbound HS-DSCH signal modulation method and coding rate will be hindered, and that outbound mobile station reception characteristics will degrade.

### Disclosure of Invention

It is an object of the present invention to provide a CDMA mobile communication method and system that enable each base station to be identified with a high degree of accuracy in uplinks from a mobile station to base stations, and that enable inbound base station reception characteristics to be improved.

The essential feature of the present invention is the fact that short codes are changed for a signal that should be received by all base stations (such as a DPCH signal, for example) and a signal that should be received only by a specific base station (such as an ACK/NACK signal in response to an HS-DSCH signal from a base station, for example).

According to an aspect of the present invention, a CDMA mobile communication method is a CDMA mobile communication method whereby communication is performed using a CDMA system via radio channels between a plurality of base stations and at least one mobile station, and has a step whereby the mobile station assigns different short-cycle spreading codes to a transmit signal that has all of the plurality of base stations as destinations and a transmit signal that has only a specific base station among the plurality of base stations as a destination.

According to another aspect of the present invention, a CDMA mobile communication system is a CDMA mobile communication system whereby communication is performed using a CDMA system via radio channels between a plurality of base stations and at least one mobile station, wherein the mobile station having a section that assigns different short-cycle spreading codes to a transmit signal that has all of the plurality of base stations as destinations and a transmit signal that has only a specific base station among the plurality of base stations as a destination, and a section that spreads a transmit signal using the assigned short-cycle spreading code and a long-cycle spreading code specific to that mobile station, and transmits the spread signal, and each of the base stations has a section that receives a signal from the mobile station, despreads the received signal using the assigned short-cycle spreading code and the long-cycle spreading code specific to the mobile station, and regenerates the pre-spreading signal.

According to still another aspect of the present invention, a mobile station is the mobile station used in a CDMA mobile communication system whereby communication is performed using a CDMA system via radio channels between a plurality of base stations and at least one mobile station, and has a section that assigns different short-cycle spreading codes to a transmit signal that has all of the plurality of base stations as destinations and a transmit signal that has only a specific base station among the plurality of base stations as a destination, and a section that spreads a transmit signal using the assigned short-cycle spreading code and a long-cycle spreading code specific to that mobile station, and transmits the spread signal.

According to a further aspect of the present invention, a base station is a base station used in a CDMA mobile communication system whereby communication is performed using a CDMA system via radio channels between a plurality of base stations and at least one mobile station, each of the base stations having a section that receives a signal from the mobile station, despreads the received signal using a short-cycle spreading code assigned so as to be different for a transmit signal that has all of the plurality of base stations as destinations and a transmit signal that has only a specific base station among the plurality of base stations as a destination, and a long-cycle spreading code specific to the mobile station, and regenerates the pre-spreading signal.

### Brief Description of Drawings

The above and other objects and features of the present invention will become clear from the following description of the preferred embodiments taken in conjunction with the accompanying drawings.
FIG.1 is a block diagram showing the configuration of a CDMA mobile communication system;
FIG.2 is a drawing showing an example of identifying base stations by means of long codes;
FIG.3 is a block diagram showing the configuration of a CDMA mobile communication system according to Embodiment 1 of the present invention;
FIG.4 is a drawing showing an example of identifying base stations by means of short codes;
FIG.5 is a block diagram showing the configuration of a CDMA mobile communication system according to Embodiment 2 of the present invention;
FIG.6 is a block diagram showing the configuration of a CDMA mobile communication system according to Embodiment 3 of the present invention;
FIG.7 is a drawing for explaining the amount of decoding processing when two arbitrary codes are assigned; and
FIG.8 is a drawing for explaining the amount of decoding processing when codes with the same code as their root are assigned.

### Best Mode for Carrying out the Invention

With reference now to the accompanying drawings, embodiments of the present invention will be explained in detail below.

### (Embodiment 1)

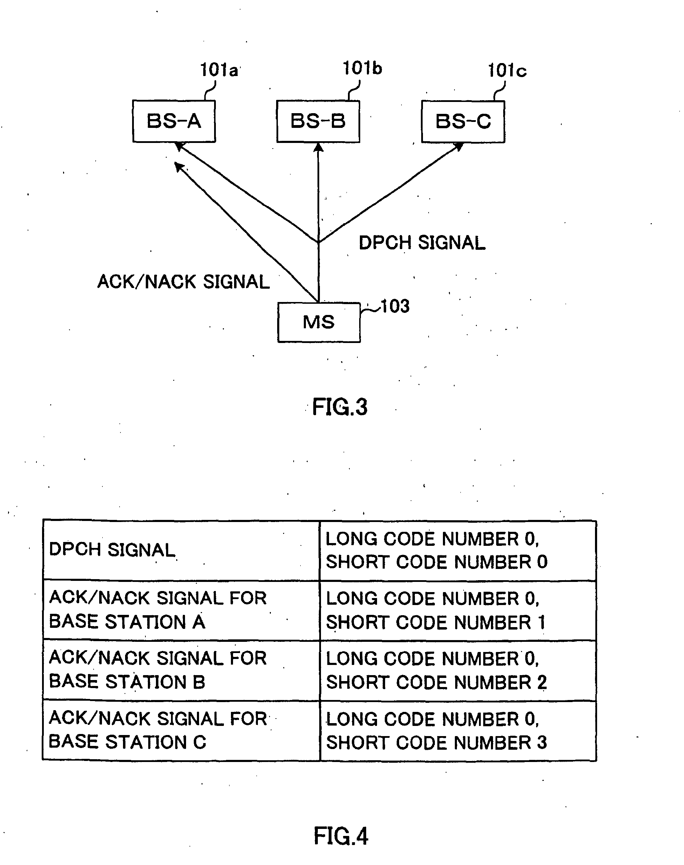

FIG.3 is a block diagram showing the configuration of a CDMA mobile communication system according to Embodiment 1 of the present invention. Here, for purposes of simplification, only three base stations (BS-A through BS-C) 101a through 101c and one mobile station (MS) 103 are shown, but these are not, of course, limitations on the number of base stations and mobile stations.

The CDMA mobile communication system shown in FIG.3 is applied to above-described HSDPA for which standardization work is currently in progress. In this system, bidirectional communications are performed using DPCH communication channels, which are conventional channels, and in parallel with this, the mobile station 103 receives, in the downlink, signals from base stations 101a through 101c using an HS-DSCH high-speed channel, and, in the uplink, returns to a specific base station 101a through 101c an ACK/NACK signal in response to an HS-DSCH signal from that base station 101a through 101c. For example, if the mobile station 103 receives an HS-DSCH signal normally from base station 101a, the mobile station 103 returns an ACK signal to that base station 101a, and if the mobile station 103 cannot receive an HS-DSCH signal normally from base station 101a, the mobile station 103 returns a NACK signal to that base station 101a. That is to say, in this system, in the uplink, there are present a signal with all of base stations 101a through 101c as destinations (a DPCH signal) and a signal with only a specific base station 101a through 101c as a destination (an ACK/NACK signal in response to an HS-DSCH signal from a base station 101a through 101c). At this time, as described above, in the case of a DPCH, soft handover between base stations is performed, and therefore the mobile station 103 transmits a DPCH signal to all the base stations 101a through 101c, whereas in the case of an HS-DSCH, soft handover between base stations is not performed, and therefore the mobile station 103 returns an ACK/NACK signal on an individual base station basis, and each of base stations 101a through 101c must accept only an ACK/NACK signal directed to that station itself.

Thus, in this embodiment, the short code (short-cycle spreading code) is changed for a signal that should be received by all of base stations 101a through 101c (a DPCH signal) and a signal that should be received only by a specific base station (an ACK/NACK signal in response to an HS-DSCH signal from a base station 101a through 101c). As explained above, a short code is a spreading code that maintains orthogonality among a plurality of channels (codes), and there is mutual orthogonality between short codes.

Specifically, for example, the mobile station 103 has a section that assigns different short codes to a signal that has all of base stations 101a through 101c as destinations (a DPCH signal) and a signal that has only a specific a base station 101a through 101c as a destination (an ACK/NACK signal in response to an HS-DSCH signal from a base station 101a through 101c), and a section that spreads a transmit signal using the assigned short code and a long code (long-cycle spreading code) specific to that mobile station 103, and transmits the spread signal. Also, each of base stations 101a through 101c has a section that receives a signal from the mobile station 103, despreads the received signal using the aforementioned assigned short code and the aforementioned long code specific to the mobile station 103, and regenerates the pre-spreading signal. As explained above, a long code is a spreading code for arranging a signal into a pseudo-random sequence, and is normally used for cell identification in a downlink and for mobile station identification in an uplink.

FIG.4 is a drawing showing an example of the assignment of code pairs comprising a short code and long code according to this embodiment-that is, an example of identifying base stations by means of short codes. In this example, a DPCH signal is spread using a combination of long code number 0 and short code number 0, an ACK/NACK signal for base station A is spread using a combination of long code number 0 and short code number 1, an ACK/NACK signal for base station B is spread using a combination of long code number 0 and short code number 2, and an ACK/NACK signal for base station C is spread using a combination of long code number 0 and short code number 3.

At this time, since the long code paired with a short code is the same code in each case, the code (for a DPCH signal) in which long code number 0 is paired with short code number 0, the code (for an ACK/NACK signal for base station A) in which long code number 0 is paired with short code number 1, the code (for an ACK/NACK signal for base station B) in which long code number 0 is paired with short code number 2, and the code (for an ACK/NACK signal for base station C) in which long code number 0 is paired with short code number 3, are mutually orthogonal. Thus, the channels on which are placed transmit signals (the DPCH signal and ACK/NACK signals for each base station) from the mobile station 103 spread using different short codes for each of destinations base stations 101a through 101c and the long code specific to the mobile station 103, are assured of mutual orthogonality. Consequently, interference does not occur between channels. Also, since a different long code is used for each mobile station, as in a conventional system, base stations 101a through 101c are able to identify mobile stations.

The operation of a CDMA mobile communication system that has the above-described configuration will now be described, using FIG.4.

First, the mobile station 103 assigns a different short code according to the transmit signal destination-that is, different short codes for a signal that has all of base stations 101a through 101c as destinations (a DPCH signal) and a signal that has only a specific base station 101a through 101c as a destination (an ACK/NACK signal in response to an HS-DSCH signal from a base station 101a through 101c). Then the mobile station 103 spreads the transmit signalusing the assigned short code and the long code specific to itself, and transmits the spread signal. In FIG.4, for example, long code number 0 and short code number 0 are paired for a DPCH signal, long code number 0 and short code number 1 are paired for an ACK/NACK signal for base station A, long code number 0 and short code number 2 are paired for an ACK/NACK signal for base station B, and long code number 0 and short code number 3 are paired for an ACK/NACK signal for base station C.

Following this, base stations 101a through 101c. receive a signal from the mobile station 103, and regenerate the pre-spreading signal by despreading the received signal using the aforementioned assigned short code and the aforementioned long code specific to the mobile station 103. For example, base station A regenerates a DPCH signal using long code number 0 and short code number 0, and regenerates a self-addressed ACK/NACK signal using long code number 0 and short code number 1. Base station B regenerates a DPCH signal using long code number 0 and short code number 0, and regenerates a self-addressed ACK/NACK signal using long code number 0 and short code number 2. Base station C regenerates a DPCH signal using long code number 0 and short code number 0, and regenerates a self-addressed ACK/NACK signal using long code number 0 and short code number 3.

Thus, according to this embodiment, in uplinks from a mobile station to base stations, different short codes are assigned to a signal that should be received by all of base stations 101a through 101c (a DPCH signal) and a signal that should be received only by a specific base station (an ACK/NACK signal in response to an HS-DSCH signal from a base station 101a through 101c), as a result of which interference between inbound channels is prevented, each base station can be identified with a high degree of accuracy, and inbound base station reception characteristics can be improved. That is to say, in this case, it is possible to identify the base station that is the destination of an ACK/NACK signal with a high degree of accuracy, thereby making it possible to reduce the possibility of a base station inadvertently receiving an ACK/NACK signal directed to another base station.

### (Embodiment 2)

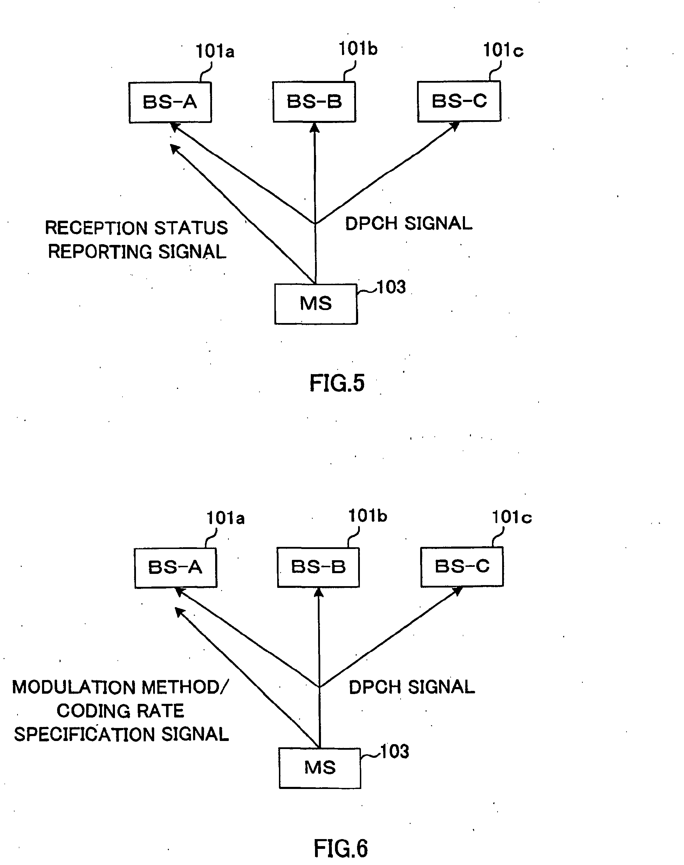

FIG.5 is a block diagram showing the configuration of a CDMA mobile communication system according to Embodiment 2 of the present invention. This CDMA mobile communication system has the same kind of basic configuration as the CDMA mobile communication system shown in FIG.3, and therefore component elements in FIG.5 identical to those in FIG.3 are assigned the same codes as in FIG.3 and their detailed explanations are omitted.

A special feature of this embodiment is that a mobile station 103 transmits in an uplink, as a signal that should identify a base station, a signal (reception status reporting signal) that reports the reception status of an outbound pilot signal from any of base stations 101a through 101c, instead of the ACK/NACK signal shown in FIG.3. For this purpose, the mobile station 103 has a section (not shown) that detects or measures' the reception status of an outbound pilot signal. Since, as stated above, the downlink propagation status differs for each base station even if DPCH communications are being carried out simultaneously with a plurality of base stations 101a through 101c, the mobile station 103 must make a different report for each base station. Each of base stations 101a through 101c has a function for receiving a reception status reporting signal from the mobile station 103, and changing the outbound HS-DSCH signal modulation method or coding rate according to the propagation path status (adaptive modulation).

Thus, in this embodiment also, the short code is changed for a signal that should be received by all of base stations 101a through 101c (a DPCH signal) and a signal that should be received only by a specific base station (a reception status reporting signal in response to an outbound pilot signal from a base station 101a through 101c).

Specifically, to take the example in FIG.4, for instance, long code number 0 and short code number 0 are paired for a DPCH signal, long code number 0 and short code number 1 are paired for a reception status reporting signal for base station A, long code number 0 and short code number 2 are paired for a reception.status reporting signal for base station B, and long code number 0 and short code number 3 are paired for a reception status reporting signal for base station C.

Thus, according to this embodiment, in uplinks from a mobile station to base stations, different short codes are assigned to a signal that should be received by all of base stations 101a through 101c (a DPCH signal) and a signal that should be received only by a specific base station (a reception status reporting signal in response to an outbound pilot signal from abase station 101a through 101c), as a result of which interference between inbound channels is prevented, each base station can be identified with a high degree of accuracy, and inbound base station reception characteristics can be improved. That is to say, in this case, it is possible to identify the base station that is the destination of a reception status reporting signal with a high degree of accuracy, thereby making it possible to reduce the possibility of a base station inadvertently receiving a reception status reporting signal directed to another base station.

### (Embodiment 3)

FIG.6 is a block diagram showing the configuration of a CDMA mobile communication system according to Embodiment 3 of the present invention. This CDMA mobile communication system has the same kind of basic configuration as the CDMA mobile communication system shown in FIG.3, and therefore component elements in FIG.6 identical to those in FIG.3 are assigned the same codes as in FIG.3 and their detailed explanations are omitted.

A special feature of this embodiment is that a mobile station 103 transmits in an uplink, as a signal that should identify a base station, a signal (modulation method/coding rate specification signal) that specifies the modulation method and/or coding rate of a signal from a base station 101a through 101c to the mobile station 103, instead of the ACK/NACK signal shown in FIG.3. For this purpose, the mobile station 103 has a section (not shown) that detects or measures the reception status of an outbound pilot signal, and a section (not shown) that decides the aforementioned modulation method and/or coding rate according to the result of this detection or measurement. For example, if the reception status is good, 16QAM will be selected as the modulation method and 1/2 as the coding rate, whereas if the reception status is poor, QPSK will be selected as the modulation method and 1/3 as the coding rate.

Differences from Embodiment 2 are that, instead of reporting the outbound pilot signal reception status to a base station 101a through 101c, the mobile station 103 specifies the outbound modulation method and/or coding rate and issues a request for this/these to a base station 101a through 101c, and that determination of the outbound modulation method and/or coding rate is performed by the mobile station 103 instead of base stations 101a through 101c.

In this embodiment also, the short code is changed for a signal that should be received by all of base stations 101a through 101c (a DPCH signal) and a signal that should be received only by a specific base station (a signal specifying the modulation method/coding rate of an outbound signal from a base station 101a through 101c).

Specifically, to take the example in FIG.4, for instance, long code number 0 and short code number 0 are paired for a DPCH signal, long code number 0 and short code number 1 are paired for a modulation method/coding rate specification signal for base station A, long code number 0 and short code number 2 are paired for a modulation method/coding rate specification signal for base station B, and long code number 0 and short code number 3 are paired for a modulation method/coding rate specification signal for base station C.

Thus, according to this embodiment, in uplinks from a mobile station to base stations, different short codes are assigned to a signal that should be received by all of base stations 101a through 101c (a DPCH signal) and a signal that should be received only by a specific base station (a signal specifying the modulation method/coding rate of an outbound signal from a base station 101a through 101c), as a result of which interference between inbound channels is prevented, each base station can be identified with a high degree of accuracy, and inbound base station reception characteristics can be improved. That is to say, in this case, it is possible to identify the base station that is the destination of a modulation method/coding rate specification signal with a high degree of accuracy, thereby making it possible to reduce the possibility of a base station inadvertently receiving a modulation method/coding rate specification signal directed to another base station.

In this embodiment, a signal that specifies the modulation method and/or coding rate is used, but this is not a limitation. For example, it is possible to use a signal that specifies the error correction coding method, spreading ratio, and/or rate, instead of, or together with, a signal that specifies the modulation method and/or coding rate.

Also, the following are available as technologies relating to the above-described embodiments.

First, a transmit signal with only a specific one of base stations 101a through 101c as a destination (for example, a reception status reporting signal according to Embodiment 2, or a modulation method/coding rate specification signal according to Embodiment 3) is transmitted to a base station for which the reception level at a mobile station 103 is greater than or equal to a predetermined threshold, among an outbound plurality of base stations 101a through 101c.

As a result, a reception status reporting signal or modulation method/coding rate specification signal is transmitted only to a base station whose outbound pilot signal reception level is good, thereby enabling the quantity of inbound signals to be reduced, and the inbound signal capacity to be increased.

Secondly, when an ACK/NACK signal according to Embodiment 1 and a reception status reporting signal according to Embodiment 2 are both transmitted to a specific one of base stations 101a through 101c, or when an ACK/NACK signal according to Embodiment 1 and a modulation method/coding rate specification signal according to Embodiment 3 are both transmitted, for example, different short codes are assigned to the two signals.

In the former case, for example, to borrow partially from the example shown in FIG.4, long code number 0 and short code number 0 are paired for a DPCH signal, long code number 0 and short code number 1 are paired for an ACK/NACK signal for base station A, long code number 0 and short code number 2 are paired for a reception status reporting signal for base station A, long code number 0 and short code number 3 are paired for an ACK/NACK signal for base station B, long code number 0 and short code number 4 are paired for a reception status reporting signal for base station B, long code number 0 and short code number 5 are paired for an ACK/NACK signal for base station C, and long code number 0 and short code number 6 are paired for a reception status reporting signal for base station C.

In a case where two or more kinds of transmit signals for which only a specific one of base stations 101a through 101c is a destination are transmitted in this way, by assigning different short codes to these signals also, identification of two or more kinds of signals can also be performed by means of short codes, and a greater inter-code distance can be achieved than when differentiation of signal types is performed by means of symbol patterns.

Thirdly, in a case where two or more kinds of signals are transmitted as transmit signals for which only a specific one of base stations 101a through 101c is a destination as an extended mode of the above-described second related technology (for example, an ACK/NACK signal according to Embodiment 1 and a reception status reporting signal according to Embodiment 2, or anACK/NACK signal according to Embodiment 1 and a modulation method/coding rate specification signal according to Embodiment 3), if short code assignment is performed to two or more kinds of transmit signals for which the same base station 101a through 101c is a destination, codes are assigned that have the same code as a root.

To explain the expression "codes that have the same code as a root", if, for example, a code that has a length of 4 chips is represented as C4,0 = (1,1,1,1), 8-chip short codes created from this code are C8,0 = (1,1,1,1,1,1,1,1) and C8, 1 = (1,1,1,1,0,0,0,0), and C8,0 and C8,1 are codes with C4,0 as their root. That is to say, if the original sequence is designated "A", the relevant code sequences are (A,A) and (A,-A), which are code sequences of twice the length of A.

In a case where two or more kinds of signals are transmitted to the same one of base stations 101a through 101c in this way, by assigning codes that have the same code as their root as the short codes assigned to these two or more kinds of signals, it is possible to reduce the amount of decoding processing on the base station side. The reason for this is as follows.

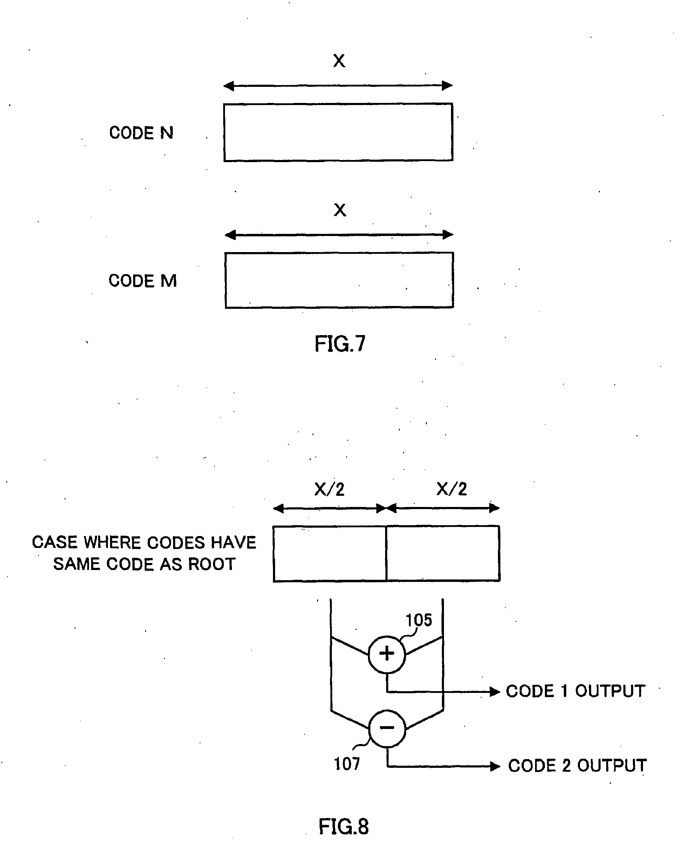

For example, if two completely arbitrary codes N and M are assigned as shown in FIG.7, then if the code length is designated "X", the amount of decoding processing necessary is a total of (2×X) decoding processes (despreading processes). On the other hand, when codes with the same code as their root are assigned, as shown in FIG.8, the two codes can be decoded by performing decoding processing with a length of X/2 respectively between the two codes, and performing addition of the two results with an adder 105 and subtraction with a subtracter 107. That is to say, the total decoding processing comprises X times plus one addition and one subtraction. Thus, in the case of codes that have the same code as their root, the amount of processing on the base station side can be reduced.

As described above, according to the present invention it is possible to identify each base station with a high degree of accuracy in uplinks from a mobile station to base stations, and to improve inbound base station reception characteristics.

A CDMA mobile communication method according to the present invention is a CDMA mobile communication method whereby communication is performed using a CDMA system via radio channels between a plurality of base stations and at least one mobile station, and has a step whereby the aforementioned mobile station assigns different short-cycle spreading codes to a transmit signal that has all of the aforementioned plurality of base stations as destinations and a transmit signal that has only a specific base station among the a forementioned plurality of base stations as a destination.

According to this method, the fact that short-cycle spreading codes (short codes) are mutually orthogonal is considered, and in uplinks from a mobile station to base stations, different short-cycle spreading codes are assigned to a transmit signal that has all of a plurality of base stations as destinations and a transmit signal that has only a specific base station as a destination, as a result of which interference between inbound channels is prevented, each base station can be identified with a high degree of accuracy, and inbound base station reception characteristics can be improved.

In a CDMA mobile communication method according to the present invention, in the above-described method, the aforementioned transmit signal that has a specific base station as a destination is an ACK/NACK signal in . response to a signal from a base station.

According to this method, it is possible to identify with a high degree of accuracy the base station that is the destination of an ACK/NACK signal in response to a signal from a base station (for example, an HS-DSCH signal), thereby making it possible to reduce the possibility of a base station inadvertently receiving an ACK/NACK signal directed to another base station.

In a CDMA mobile communication method according to the present invention, in an above-described method, the aforementioned transmit signal that has a specific base station as a destination is a signal that reports the reception status of a pilot signal from a base station to the relevant mobile station.

According to this method, it is possible to identify with a high degree of accuracy the base station that is the destination of a signal that reports the reception status of an outbound pilot signal from a base station to the relevant mobile station, thereby making it possible to reduce the possibility of a base station inadvertently receiving a reception status reporting signal directed to another base station.

In a CDMA mobile communication method according to the present invention, in an above-described method, the aforementioned transmit signal that has a specific base station as a destination is a signal that specifies the modulation method of a signal from a base station to the relevant mobile station.

According to this method, it is possible to identify with a high degree of accuracy the base station that is the destination of a signal that specifies the modulation method of a signal from a base station to the relevant mobile station, thereby making it possible to reduce the possibility of a base station inadvertently receiving a modulation method specification signal directed to another base station.

In a CDMA mobile communication method according to the present invention, in an above-described method, the aforementioned transmit signal that has a specific base station as a destination is a signal that specifies the coding rate of a signal from a base station to the relevant mobile station.

According to this method, it is possible to identify with a high degree of accuracy the base station that is the destination of a signal that specifies the coding rate of a signal from a base station to the relevant mobile station, thereby making it possible to reduce the possibility of a base station inadvertently receiving a coding rate specification signal directed to another base station.

In a CDMA mobile communication method according to the present invention, in an above-described method, the aforementioned transmit signal that has a specific base station as a destination is a signal that specifies the error correction coding method of a signal from a base station to the relevant mobile station.

According to this method, it is possible to identify with a high degree of accuracy the base station that is the destination of a signal that specifies the error correction coding method of a signal from a base station to the relevant mobile station, thereby making it possible to reduce the possibility of a base station inadvertently receiving an error correction coding method specification signal directed to another base station.

In a CDMA mobile communication method according to the present invention, in an above-described method, the aforementioned transmit signal that has a specific base station as a destination is a signal that specifies the spreading ratio of a signal from a base station to the relevant mobile station.

According to this method, it is possible to identify with a high degree of accuracy the base station that is the destination of a signal that specifies the spreading ratio of a signal from a base station to the relevant mobile station, thereby making it possible to reduce the possibility of a base station inadvertently receiving a spreading ratio specification signal directed to another base station.

In a CDMA mobile communication method according to the present invention, in an above-described method, the aforementioned transmit signal that has a specific base station as a destination is a signal that specifies the rate of a signal from a base station to the relevant mobile station.

According to this method, it is possible to identify with a high degree of accuracy the base station that is the destination of a signal that specifies the rate of a signal from a base station to the relevant mobile station, thereby making it possible to reduce the possibility of a base station inadvertently receiving a rate specification signal directed to another base station.

In a CDMA mobile communication method according to the present invention, in an above-described method, the aforementioned transmit signal that has a specific base station as a destination is transmitted only to a base station whose reception level at the relevant mobile station is greater than or equal to a predetermined threshold, among the aforementioned plurality of base stations.

According to this method, a reception status reporting signal, modulation method specification signal, coding rate specification signal, error correction coding method specification signal, spreading ratio specification signal, or rate specification signal is transmitted only to a base station whose outbound pilot signal reception level is good, thereby enabling the quantity of inbound signals to be reduced, and the inbound signal capacity to be increased.

In a CDMA mobile communication method according to the present invention, in an above-described method, when an ACK/NACK signal in response to a signal from a base station and a signal that reports the reception status of a pilot signal from a base station to the relevant mobile station are both transmitted as transmit signals that have the aforementioned specific base station as a destination, different short-cycle spreading codes are assigned to the two signals.

According to this method, when an ACK/NACK signal in response to a signal from a base station and a signal that reports the reception status of a pilot signal from a base station to the relevant mobile station are both transmitted, different short-cycle spreading codes are assigned to the two signals also, thereby enabling identification of these two kinds of signals also to be performed by means of short-cycle spreading codes, and a greater inter-code distance to be achieved than when differentiation of signal types is performed by means of symbol patterns.

In a CDMA mobile communication method according to the present invention, in an above-described method, when an ACK/NACK signal in response to a signal from a base station and a signal that specifies the modulation method of a signal from a base station to the relevant mobile station are both transmitted as transmit signals that have the aforementioned specific base station as a destination, different short-cycle spreading codes are assigned to the two signals.

According to this method, when an ACK/NACK signal in response to a signal from a base station and a signal that specifies the modulation method of a signal from a base station to the relevant mobile station are both transmitted, different short-cycle spreading codes are assigned to the two signals also, thereby enabling identification of these two kinds of signals also to be performed by means of short-cycle spreading codes, and a greater inter-code distance to be achieved than when differentiation of signal types is performed by means of symbol patterns.

In a CDMA mobile communication method according to the present invention, in an above-described method, when an ACK/NACK signal in response to a signal from a base station and a signal that specifies the coding rate of a signal from a base station to the relevant mobile station are both transmitted as transmit signals that have the aforementioned specific base station as a destination, different short-cycle spreading codes are assigned to the two signals.

According to this method, when an ACK/NACK signal in response to a signal from a base station and a signal that specifies the coding rate of a signal from a base station to the relevant mobile station are both transmitted, different short-cycle spreading codes are assigned to the two signals also, thereby enabling identification of these two kinds of signals also to be performed by means of short-cycle spreading codes, and a greater inter-code distance to be achieved than when differentiation of signal types is performed by means of symbol patterns.

In a CDMA mobile communication method according to the present invention, in an above-described method, when an ACK/NACK signal in response to a signal from a base station and a signal that specifies the error correction coding method of a signal from a base station to the relevant mobile station are both transmitted as transmit signals that have the aforementioned specific base station as a destination, different short-cycle spreading codes are assigned to the two signals.

According to this method, when an ACK/NACK signal in response to a signal from a base station and a signal that specifies the error correction coding method of a signal from a base station to the relevant mobile station are both transmitted, different short-cycle spreading codes are assigned to the two signals also, thereby enabling identification of these two kinds of signals also to be performed by means of short-cycle spreading codes, and a greater inter-code distance to be achieved than when differentiation of signal types is performed by means of symbol patterns.

In a CDMA mobile communication method according to the present invention, in an above-described method, when an ACK/NACK signal in response to a signal from a base station and a signal that specifies the spreading ratio of a signal from a base station to the relevant mobile station are both transmitted as transmit signals that have the aforementioned specific base station as a destination, different short-cycle spreading codes are assigned to the two signals.

According to this method, when an ACK/NACK signal in response to a signal from a base station and a signal that specifies the spreading ratio of a signal from a base station to the relevant mobile station are both transmitted, different short-cycle spreading codes are assigned to the two signals also, thereby enabling identification of these two kinds of signals also to be performed by means of short-cycle spreading codes, and a greater inter-code distance to be achieved than when differentiation of signal types is performed by means of symbol patterns.

In a CDMA mobile communication method according to the present invention, in an above-described method, when an ACK/NACK signal in response to a signal from a base station and a signal that specifies the rate of a signal from a base station to the relevant mobile station are both transmitted as transmit signals that have the aforementioned specific base station as a destination, different short-cycle spreading codes are assigned to the two signals.

According to this method, when an ACK/NACK signal in response to a signal from a base station and a signal that specifies the rate of a signal from a base station to the relevant mobile station are both transmitted, different short-cycle spreading codes are assigned to the two signals also, thereby enabling identification of these two kinds of signals also to be performed by means of short-cycle spreading codes, and a greater inter-code distance to be achieved than when differentiation of signal types is performed by means of symbol patterns.

In a CDMA mobile communication method according to the present invention, in an above-described method, when short-cycle spreading codes are assigned to two kinds of signals that have the same base station as a destination, codes that have the same code as their root are assigned.

According to this method, when two signals comprising an ACK/NACK signal in response to a signal . from a base station and a signal that reports the reception status of a pilot signal from a base station to the relevant mobile station, or a signal that specifies the modulation method of a signal from a base station to the relevant mobile station, or a signal that specifies the coding rate of a signal from a base station to the relevant mobile station, or a signal that specifies the error correction coding method of a signal from a base station to the relevant mobile station, or a signal that specifies the spreading ratio of a signal from a base station to the relevant mobile station, or a signal that specifies the rate of a signal from a base station.to the relevant mobile station, are both transmitted to the same base station, codes that have the same code as their root are assigned , thereby enabling the amount of processing on the base station side to be reduced.

A CDMA mobile communication system according to the present invention is a CDMA mobile communication system whereby communication is performed using a CDMA system via radio channels between a plurality of base stations and at least one mobile station, and has a configuration wherein the aforementioned mobile station has a section that assigns different short-cycle spreading codes to a transmit signal that has all of the aforementioned plurality of base stations as destinations and a transmit signal that has only a specific base station among the aforementioned plurality of base stations as a destination, and a section that spreads a transmit signal using the assigned short-cycle spreading code and a long-cycle spreading code specific to that mobile station, and transmits the spread signal, and each of the aforementioned base stations has a section that receives a signal from the aforementioned mobile station, despreads the received signal using the aforementioned assigned short-cycle spreading code and the aforementioned long-cycle spreading code specific to the aforementioned mobile station, and regenerates the pre-spreading signal.

According to this configuration, the fact that short-cycle spreading codes (short codes) are mutually orthogonal, and the fact that short-cycle spreading codes (short codes) are mutually orthogonal even when paired with a long-cycle spreading code (long code), are considered, and in uplinks from a mobile station to base stations, different short-cycle spreading codes are assigned to a transmit signal that has all of a plurality of base stations as destinations and a transmit signal that has only a specific base station as a destination, as a result of which interference between channels is prevented, each base station can be identified with a high degree of accuracy, and inbound base station reception characteristics can be improved.

A mobile station according to the present invention is used in a CDMA mobile communication system whereby communication is performed using a CDMA system via radio channels between a plurality of base stations and at least one mobile station, and has a configuration comprising a section that assigns different short-cycle spreading codes to a transmit signal that has all of the a for ementioned plurality of base stations as destinations and a transmit signal that has only a specific base station among the aforementioned plurality of base stations as a destination, and a section that spreads a transmit signal using the assigned short-cycle spreading code and a long-cycle spreading code specific to that mobile station, and transmits the spread signal.

According to this configuration, it is possible to provide a mobile station that is one element for constructing an above-described CDMA mobile communication system.

A base station according to the present invention is used in a CDMA mobile communication system whereby communication is performed using a CDMA system via radio channels between a plurality of base stations and at least one mobile station, wherein each aforementioned base station has a configuration comprising a section that receives a signal from the aforementioned mobile station, despreads the received signal using a short-cycle spreading code assigned so as to differ for a transmit signal that has all of the aforementioned plurality of base stations as destinations and a transmit signal that has only a specific base station among the aforementioned plurality of base stations as a destination, and a long-cycle spreading code specific to the aforementioned mobile station, and regenerates the pre-spreading signal.

According to this configuration, it is possible to provide a base station that is one element for constructing an above-described CDMA mobile communication system.

This application is based on Japanese Patent Application No.2001-242851 filed on August 9, 2001, entire contents of which are expressly incorporated by reference herein.

### Industrial Applicability

The present invention is applicable to a CDMA mobile communication method and system.

## Claims

1. A CDMA mobile communication method whereby communication is performed using a CDMA system via radio channels between a plurality of base stations and at least one mobile station, comprising a step whereby said mobile station assigns different short-cycle spreading codes to a transmit signal that has all of said plurality of base stations as destinations and a transmit signal that has only a specific base station among said plurality of base stations as a destination.

2. The CDMA mobile communication method according to claim 1, wherein said transmit signal that has a specific base station as a destination is an ACK/NACK signal in response to a signal from a base station.

3. The CDMA mobile communication method according to claim 1, wherein said transmit signal that has a specific base station as a destination is a signal that reports a reception status of a pilot signal from a base station to said mobile station.

4. The CDMA mobile communication method according to claim 1, wherein said transmit signal that has a specific base station as a destination is a signal that specifies a modulation method of a signal from a base station to said mobile station.

5. The CDMA mobile communication method according to claim 1, wherein said transmit signal that has a specific base station as a destination is a signal that specifies a coding rate of a signal from a base station to said mobile station.

6. The CDMA mobile communication method according to claim 1, wherein said transmit signal that has a specific base station as a destination is a signal that specifies an error correction coding method of a signal from a base station to said mobile station.

7. The CDMA mobile communication method according to claim 1, wherein said transmit signal that has a specific base station as a destination is a signal that specifies a spreading ratio of a signal from a base station to said mobile station.

8. The CDMA mobile communication method according to claim 1, wherein said transmit signal that has a specific base station as a destination is a signal that specifies a rate of a signal from a base station to said mobile station.

9. The CDMA mobile communication method according to claim 3, wherein said transmit signal that has a specific base station as a destination is transmitted only to a base station whose reception level at said mobile station is greater than or equal to a predetermined threshold among said plurality of base'stations.

10. The CDMA mobile communication method according to claim 4, wherein said transmit signal that has a specific base station as a destination is transmitted only to a base station whose reception level at said mobile station is greater than or equal to a predetermined threshold among said plurality of base stations.

11. The CDMA mobile communication method according to claim 5, wherein said transmit signal that has a specific base station as a destination is transmitted only to a base station whose reception level at said mobile station is greater than or equal to a predetermined threshold among said plurality of base stations.

12. The CDMA mobile communication method according to claim 6, wherein said transmit signal that has a specific base station as a destination is transmitted only to a base station whose reception level at said mobile station is greater than or equal to a predetermined threshold among said plurality of base stations.

13. The CDMA mobile communication method according to claim 7, wherein said transmit signal that has a specific base station as a destination is transmitted only to a base station whose reception level at said mobile station is greater than or equal to a predetermined threshold among said plurality of base stations.

14. The CDMA mobile communication method according to claim 8, wherein said transmit signal that has a specific base station as a destination is transmitted only to a base station whose reception level at said mobile station is greater than or equal to a predetermined threshold among said plurality of base stations.

15. The CDMA mobile communication method according to claim 1, wherein, when two signals comprising an ACK/NACK signal in response to a signal from a base station and a signal that reports a reception status of a pilot signal from a base station to said mobile station are both transmitted as said transmit signal that has a specific base station as a destination, different short-cycle spreading codes are assigned to said two signals.

16. The CDMA mobile communication method according to claim 1, wherein, when two signals comprising an ACK/NACK signal in response to a signal from a base station and a signal that specifies a modulation method of a signal from a base station to said mobile station are both transmitted as said transmit signal that has a specific base station as a destination, different short-cycle spreading codes are assigned to said two signals.

17. The CDMA mobile communication method according to claim 1, wherein, when two signals comprising an ACK/NACK signal in response to a signal from a base station and a signal that specifies a coding rate of a signal from a base station to said mobile station are both transmitted as said transmit signal that has a specific base station as a destination, different short-cycle spreading codes are assigned to said two signals.

18. The CDMA mobile communication method according to claim 1, wherein, when two signals comprising an ACK/NACK signal in response to a signal from a base station and a signal that specifies an error correction coding method of a signal from a base station to said mobile station are both transmitted as said transmit signal that has a specific base station as a destination, different short-cycle spreading codes are assigned to said two signals.

19. The CDMA mobile communication method according to claim 1, wherein, when two signals comprising an ACK/NACK signal in response to a signal from a base station and a signal that specifies a spreading ratio of. a signal from a base station to said mobile station are both transmitted as said transmit signal that has a specific base station as a destination, different short-cycle spreading codes are assigned to said two signals.

20. The CDMA mobile communication method according to claim 1, wherein, when two signals comprising an ACK/NACK signal in response to a signal from a base station and a signal that specifies a rate of a signal from a base station to said mobile station are both transmitted as said transmit signal that has a specific base station as a destination, different short-cycle spreading codes are assigned to said two signals.

21. The CDMA mobile communication method according to claim 15, wherein, when short-cycle spreading codes are assigned to two kinds of signals that have an identical base station as a destination, codes that have an identical code as a root are assigned.

22. The CDMA mobile communication method according to claim 16, wherein, when short-cycle spreading codes are assigned to two kinds of signals that have an identical base station as a destination, codes that have an identical code as a root are assigned.

23. The CDMA mobile communication method according to claim 17, wherein, when short-cycle spreading codes are assigned to two kinds of signals that have an identical base station as a destination, codes that have an identical code as a root are assigned.

24. The CDMA mobile communication method according to claim 18, wherein, when short-cycle spreading codes are assigned to two kinds of signals that have an identical base station as a destination, codes that have an identical code as a root are assigned.

25. The CDMA mobile communication method according to claim 19, wherein, when short-cycle spreading codes are assigned to two kinds of signals that have an identical base station as a destination, codes that have an identical code as a root are assigned.

26. The CDMA mobile communication method according to claim 20, wherein, when short-cycle spreading codes are assigned to two kinds of signals that have an identical base station as a destination, codes that have an identical code as a root are assigned.

27. A CDMA mobile communication system whereby communication is performed using a CDMA system via radio channels between a plurality of base stations and at least one mobile station;
wherein said mobile station comprises:
a section that assigns different short-cycle spreading codes to a transmit signal that has all of said plurality of base stations as destinations and a transmit signal that has only a specific base station among said plurality of base stations as a destination; and
a section that spreads a transmit signal using an assigned short-cycle spreading code and a long-cycle spreading code specific to said mobile station, and transmits the spread signal;
and wherein each of said base stations comprises a section that receives a signal from said mobile station, despreads said received signal using said assigned short-cycle spreading code and said long-cycle spreading code specific to said mobile station, and regenerates a pre-spreading signal.

28. Amobile station used in a CDMA mobile communication system whereby communication is performed using a CDMA system via radio channels between a plurality of base stations and at least one mobile station, said mobile station comprising:
a section that assigns different short-cycle spreading codes to a transmit signal that has all of said plurality of base stations as destinations and a transmit signal that has only a specific base station among said plurality of base stations as a destination; and
a section that spreads a transmit signal using an assigned short-cycle spreading code and a long-cycle spreading code specific to said mobile station, and transmits a spread signal.

29. A base station used in a CDMA mobile communication system whereby communication is performed using a CDMA system via radio channels between a plurality of base stations and at least one mobile station, each of said base stations comprising a section that receives a signal from said mobile station, despreads a received signal using said short-cycle spreading code assigned so as to differ for a transmit signal that has all of said plurality of base stations as destinations and a transmit signal that has only a specific base station among said plurality of base stations as a destination, and a long-cycle spreading code specific to said mobile station, and regenerates a pre-spreading signal.
